# EUROPÄISCHE PATENTANMELDUNG

(11) **EP 0 828 118 A2**
(43) Veröffentlichungstag der Anmeldung: **11.03.1998**
(21) Anmeldenummer: 97111816.1
(22) Anmeldetag: 11.07.1997
(51) Int. Cl.: F24F 12/00

(54) **Lüftungsvorrichtung zum gleichzeitigen Be- und Entlüften von Räumen**

(30) Priorität: 05.09.1996 DE 29615472 U
(71) Anmelder: SIEGENIA-FRANK KG, 57074 Siegen (DE)
(72) Erfinder: Bottländer, Andre, 57462 Olpe (DE); Müchler, Torsten, 57258 Freudenberg (DE); Kucharczyk, Eckhard, 57234 Wilnsdorf (DE); van Well, Frank, 51063 Köln (DE); Wader, Gerhard, 58511 Lüdenscheid (DE); Wiesner, Karl, 57234 Wilsndorf (DE)

(57) **Zusammenfassung**

Es wird eine Lüftungsvorrichtung zum gleichzeitigen Be- und Entlüften von Räumen, insbesondere mit einer Einrichtung zur Wärmerückgewinnung (25) aus dem Entlüftungs-Medienstrom (18), mit einem Gehäuse, das - beispielsweise rauminnenseitig - an oder in einer Gebäudewand (3) angeordnet sowie an je einen zur Außenluft führenden Lüftungskanal (5) für den Be- und den Entlüftungs-Medienstrom anschließbar ist. Innerhalb des Gehäuses sind zwei voneinander getrennte Strömungswege ausgebildet, wobei je eine Zwangslüftungsvorrichtung (28, 29) für den Be- und den Entlüftungs-Medienstrom (15, 18) vorgesehen ist, und wobei sowohl im Be- als auch in dem Entlüftungs-Medienstrom (15, 18) Filterelemente (26, 27) vorgesehen sind.

Die Erfindung sieht dabei vor, daß die Zwangslüftungsvorrichtungen (28, 29) sowohl im Be- als auch im Entlüftungs-Medienstrom (15, 18) eine Anordnung haben, bei der der Ansaugweg der jeweiligen Zwangslüftungsvorrichtungen (28, 29) - innerhalb des Gehäuses (9) der Lüftungsvorrichtung (1) - länger bemessen ist als der Ausblasweg.

## Beschreibung

Die Erfindung betrifft eine Lüftungsvorrichtung zum gleichzeitigen Be- und Entlüften von Räumen insbesondere mit einer Einrichtung zur Wärmerückgewinnung aus dem Entlüftungs-Medienstrom,
mit einem Gehäuse, das - beispielsweise rauminnenseitig - an oder in einer Gebäudewand angeordnet sowie an je einen zur Außenluft führenden Lüftungskanal für den Be- und den Entlüftungs-Medienstrom anschließbar ist,
wobei innerhalb des Gehäuses zwei voneinander getrennte Strömungswege ausgebildet sind,
wobei je eine Zwangslüftungsvorrichtung für den Be- und den Entlüftungs-Medienstrom vorgesehen ist,
und wobei sowohl im Be- als auch in dem Entlüftungs-Medienstrom je ein Filterelement vorgesehen ist.

Lüftungsvorrichtungen dieser Art sind bereits bekannt geworden durch die DE 38 28 011 C2. Bei der darin beschriebenen Lüftungsvorrichtung besteht die Zwangslüftungsvorrichtung für den Be- und den Entlüftungs-Medienstrom aus einem Gebläserad welches mittig mittels einer Trennwand geteilt ist, so daß eine Gebläseradhälfte dem Belüftungs-Medienstrom zugeordnet werden kann, während die andere Gebläseradhälfte dem Entlüftungs-Medienstrom zugehörig ist. Die Mittelachse des Gebläserades verläuft dabei axial fluchtend oder aber in einem spitzen Winkel zu dem Lüftungskanal, der das Gehäuse der Lüftungsvorrichtung mit der Außenluft verbindet.

Dabei liegt die Zwangslüftungsvorrichtung nahezu unmittelbar hinter der das Gehäuse begrenzenden Frontplatte. Die durch den Betrieb der Zwangslüftungsvorrichtung auftretenden Eigengeräusche sowie die durch den Lüftungskanal geleiteten Schallwellen werden daher ohne wesentliche Dämpfung oder Dämmung in den Innenraum geleitet.

Der Erfindung liegt nun die Aufgabe zugrunde, eine Lüftungsvorrichtung der eingangs erwähnten Art zu schaffen, die einerseits ein Maximum an Luftaustausch gewährleistet, andererseits aber eine weitestgehende Schallisolation sowohl gegen Außengeräusche als auch gegen die Betriebesgeräusche ermöglicht. Trotzdem soll die Lüftungsvorrichtung möglichst montage- und wartungsfreundlich ausgelegt sein.

Die Lösung dieser Probleme werden erfindungsgemäß nach dem Kennzeichen des Anspruchs 1 dadurch erreicht, daß die Zwangslüftungsvorrichtungen sowohl im Be- als auch im Entlüftungs-Medienstrom eine Anordnung haben, bei der der Ansaugweg der jeweiligen Zwangslüftungsvorrichtung - innerhalb des Gehäuses der Lüftungsvorrichtung - länger bemessen ist als der Ausblasweg.

Alternativ dazu oder in Verbindung damit kann aber auch vorgesehen werden, daß der das Gehäuse der Lüftungsvorrichtung mit der Außenluft verbindende Lüftungskanal zumindest im Bereich des Belüftungs-Medienstroms in eine einen größeren Querschnitt aufweisenden Kammer des Gehäuses mündet, die - durch zumindest eine Trennwand in den Be- und Entlüftungs-Medienstrom geteilt - eine nahezu senkrecht zur Mittelachse des Lüftungskanals verlaufende Frontplatte aufweist.

Eine vorteilhafte Ausgestaltung ergibt sich für die Lüftungsvorrichtung auch dadurch, daß das Filterelement sowohl für den Be- als auch für den Entlüftungs-Medienstrom im jeweiligen Ansaugweg der Zwangslüftungsvorrichtung angeordnet ist.

Um einem Verschmutzen vorzubeugen und einen optimalen Betrieb zu gewährleisten, ist weiterhin vorgesehen, daß die Einrichtung zur Wärmerückgewinnung jeweils zwischen dem dem jeweiligen Medienstrom zugeordneten Filterelement und der Zwangslüftungsvorrichtung angeordnet ist.

Das Filterelement des Belüftungs-Medienstroms weist dabei in einer besonderen Ausgestaltung bevorzugt einen anderen Abscheidgrad auf, als das Filterelement des Entlüftungs-Medienstroms.

Um einen maximalen Lüftungseffekt bei nur geringen Eigengeräuschen zu gewährleisten, ist es zweckmäßig, daß jede Zwangslüftungsvorrichtung aus zwei Gebläsen besteht, wobei die im Belüftungs-Medienstrom angeordneten Gebläse getrennte Ausblaskanäle aufweisen, während die im Entlüftungs-Medienstrom angeordneten Gebläse einen gemeinsamen Ausblaskanal besitzen.

Eine maximierte Schallisolation bzw. Dämpfung ergibt sich in einer weiteren Ausgestaltung dadurch, daß sowohl der Be- als auch der Entlüftungs-Medienstrom mehrfach z.B., orthogonal, abgeknickt sind, wobei die der Rauminnenseite zugewandten Medienstromwege mit schallabsorbierendem Material ausgekleidet sind.

Eine weitere Reduzierung der Schallbelastung läßt sich dadurch erreichen, daß die Frontplatte aus einer vorzugsweise nicht ebenen, z.B. konvex oder konkav gekrümmten Platte besteht, die zur Kammerinnenseite mit schallabsorbierendem Material belegt ist und ggf. noch darauf angeordnete schallabsorbierende und/oder schallreflektierende Metallplatten aufweist.

Eine weitere vorteilhafte Ausgestaltung ergibt sich dadurch, daß die Zwangslüftungsvorrichtungen an den oberen und unteren waagerechten Begrenzungswänden der Kammer angeordnet sind.

Um die Eigengeräusche der Zwangslüftungsvorrichtungen zu minimieren ist vorgesehen, daß diese unmittelbar in einem blockartigen Einsatzkörper aus Schalldämmaterial, beispielsweise Schaumkunststoff oder Moosgummi, gelagert sind.

Eine raumsparende Variante ergibt sich, wenn die die Kammer in den Be- und Entlüftungs-Medienstrom teilende Trennwand weitestgehend durch die Einrichtung zur Wärmerückgewinnung gebildet wird.

Um eine optimale Wartung der Lüftungseinrichtung zu gewährleisten, ist vorgesehen, daß die Einrichtung zur Wärmerückgewinnung um eine Horizontalachse schwenkbar in dem Gehäuse gelagert ist, wobei die Lagerachse eine bajonettartige Verriegelung bildet, über die die Einrichtung zur Wärmerückgewinnung aus dem Gehäuse entnommen werden kann.

Um die Druckverluste bei der Belüftung zu vermindern ist weiterhin vorgesehen, daß der Filter des Belüftungs-Medienstroms von der Einrichtung zur Wärmerückgewinnung beabstandet ist, während der Filter des Entlüftungs-Medienstroms näher an der Einrichtung zur Wärmerückgewinnung angeordnet werden kann.

Ein nötiger Austausch der verschmutzten Filter ist dadurch gewährleistet, daß sie lösbar mit der Einrichtung zur Wärmerückgewinnung verbunden sind.

Um Wartungsarbeiten im Inneren des Gehäuses vornehmen zu können, ist vorgesehen, daß die die Prallwand bildende Frontplatte schwenkbar am Gehäuse gelagert ist.

Erleichtert wird die Wartung auch dadurch, daß die Zwangslüftungsvorrichtungen schubladenartig - ohne zusätzliche Befestigungsmittel - im Gehäuse gelagert sind, wobei deren elektrische Stromversorgung direkt über an der Rückwand des Gehäuses angebrachte Kontaktflächen - kabellos - erfolgt.

Das Gehäuse der Lüftungsvorrichtung besteht vorzugsweise aus einem wannenartigen Grundkörper auf dem ein Rahmen lösbar befestigt ist, wobei alle senkrecht zur Gehäuse-Hauptebene verlaufenden Begrenzungsflächen der Wanne geschlossen sind.

Um eine einfache Montage der Lüftungsvorrichtung zu ermöglichen, ist vorgesehen, daß an dem wannenartigen Grundkörper ein Rohrabschnitt - der entsprechend dem Lüftungskanal in einer waagerechten Ebene eine Längstrennwand aufweist - fest, aber zumindest begrenzt winkelbeweglich angeflanscht ist, der mit einem Lüftungskanal kuppelbar ist.

Vorteilhaft wird eine Kupplungsvorrichtung mit dem Lüftungskanal dadurch gebildet, daß sich der Rohrabschnitt zu seinem freien Ende hin am Außenumfang konisch verjüngt, während die Trennwand in einer sich konisch öffnenden Nut endet.

Für eine einfach herzustellende Ausführung der Lüftungsvorrichtung ist vorgesehen, daß die Einrichtung zur Wärmerückgewinnung als rekuperativ arbeitender Kreuzstrom-Wärmetauscher ausgebildet ist.

Eine besonders wirksame und stabile Ausgestaltung dieses Kreuzstrom-Wärmetauschers wird erhalten, wenn dieser aus einem Paket von C-förmigen Profilabschnitten besteht, die wechselseitig um eine normal zu ihrer Ebene gerichtete Achse jeweils um 90° gegeneinander verdreht sind.

Zur Vermeidung von Reibungsverlusten ist weiterhin vorgesehen, daß die Profilabschnitte parallel zu den Längswänden verlaufende Stege aufweisen.

Eine besonders einfach herzustellende und darüber hinaus sehr stabile Ausgestaltung sieht vor, daß der die Einrichtung zur Wärmerückgewinnung tragende Rahmen von Seitenwangen und diese miteinander verbindenden Profilstäben gebildet wird.

Um die Profilabschnitte festzulegen, ist weiterhin vorgesehen, daß die Profilstäbe deren Ecken umgreifen. Zur Trennung von Belüftungs- und Entlüftungs-Medienstrom ist darüber hinaus vorgesehen, daß die Profilstäbe Dichtungen tragen, die im geschlossenen Zustand der Frontplatte an entsprechenden Dichtstellen des Gehäuses bzw. der Frontplatte anstoßen.

Um die Wärmeübertragung einerseits und die Luftleistung andererseits zu maximieren kann vorgesehen werden, daß der Rahmen mit der Einrichtung zur Wärmerückgewinnung über die gesamte Breite der Kammer reicht.

Weitere Merkmale und Vorteile des Gegenstandes der Erfindung werden nachfolgend an in den Zeichnungen dargestellten Ausführungsbeispielen erläutert. Hierbei zeigen
- Fig.1: eine Lüftungsvorrichtung in verkleinertem Vertikalschnitt
- Fig. 2: einen Horizontalabschnitt durch die Lüftungsvorrichtung nach Fig. 1 entlang der Linie II-II,
- Fig. 3: einen Horizontalschnitt durch die Lüftungsvorrichtung nach Fig. 1 entlang der Linie III-III,
- Fig. 4: eine schematisierte Raumform-Darstellung der Lüftungsvorrichtung mit durch schraffierte Pfeile gekennzeichnetem Belüftungs-Medienstromweg,
- Fig. 5: eine der Fig. 4 entsprechende Darstellung, jedoch mit durch offene Pfeile gekennzeichnetem Entlüftungs-Medienstromweg,
- Fig. 6: im Vertikalschnitt das Gehäuse einer Zwangslüftungsvorrichtung,
- Fig. 7: die untere Hälfte des Gehäuses nach Fig. 6 in Draufsicht gemäß Pfeilrichtung VII,
- Fig. 8: in größerem Maßstab einen Schnitt entlang der Linie VIII-VIII in Fig. 7 und
- Fig. 9: im Querschnitt die Einrichtung zur Wärmerückgewinnung in ausführlicher Darstellung.

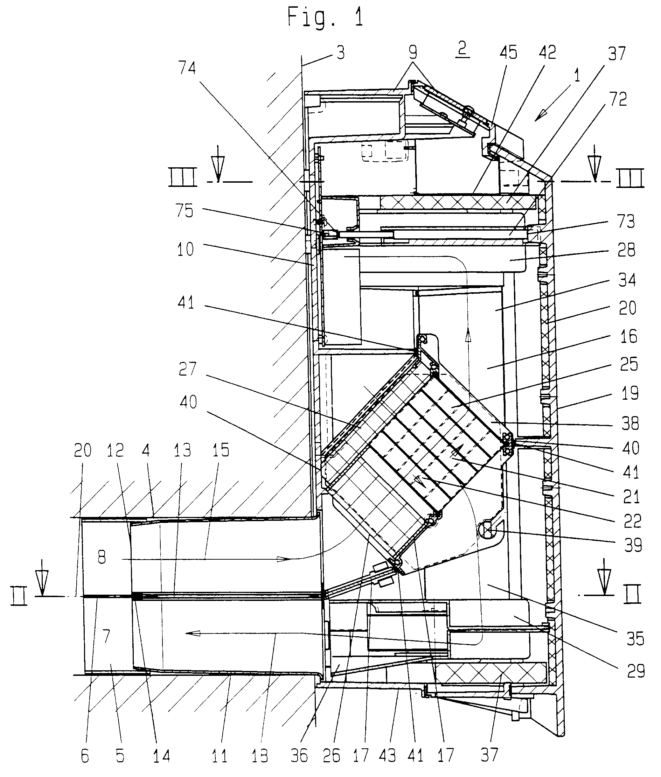

Fig. 1 der Zeichnung zeigt einen Vertikalschnitt durch eine Lüftungsvorrichtung 1 zum gleichzeitigen Be- und Entlüften eines Raumes 2. Diese Lüftungsvorrichtung 1 läßt sich, vorzugsweise rauminnenseitig, an oder in einer Gebäudewand 3 befestigen, die einen Durchbruch 4 nach außen aufweist, in den sich ein rohrförmiger Lüftungskanal 5 einsetzen läßt.

Der rohrförmige Lüftungskanal 5 hat dabei eine Trennwand 6, die zwei längsverlaufende Strömungskanäle 7 und 8 von etwa gleichem Querschnitt gegeneinander abgrenzt. Bevorzugt besitzt der Lüftungskanal 5 einen runden Querschnitt, in dem durch die Trennwand 6 die beiden Strömungskanäle 7 und 8 jeweils mit halbkreisförmigem Querschnitt vorgesehen sind.

Das Gehäuse 9 der Lüftungsvorrichtung 1 besitzt einen wannenartigen Grundkörper 10 an den ein Rohrabschnitt 11 fest, vorzugsweise aber begrenzt winkelbeweglich, angeflanscht ist, der in den Durchbruch 4 hineingesteckt werden kann. Der Rohrabschnitt 11 verjüngt sich wenigstens nahe seinem freien Ende 12 an seinem Außenumfang konisch, während eine diametrale Trennwand 13 desselben in einer sich konisch öffnenden Nut 14 endet. Durch diese Ausgestaltung des Rohrabschnitts 11 wird eine problemlose Kupplung der Lüftungsvorrichtung 1 mit dem Lüftungskanal 5 erreicht, weil der Rohrabschnitt 11 mit seinem verjüngten freien Ende 12 in den etwas größer bemessenen Lüftungskanal 5 eintauchen kann, während zugleich die Trennwand 6 des Lüftungskanals 5 in die konisch geformte Nut 14 der Trennwand 13 ragt.

Ein auf diese Art und Weise gebildeter Belüftungs-Medienstromweg 15 endet in einer Kammer 16 des Gehäuses 9, die mit einem größeren Durchströmquerschnitt versehen ist, als der Belüftungs-Medienstromweg 15 selbst. Dabei wird die Kammer 16 durch eine Trennwand 17 in den Belüftungs-Medienstromweg 15 und einen Entlüftungs-Medienstromweg 18 geteilt. Letzterer ist dabei durch den Rohrabschnitt 11 und den Lüftungskanal 5 im Durchbruch 4 der Gebäudewand 3 zur Außenluft geführt. Zur Rauminnenseite wird die Kammer 16 durch eine Frontplatte 19 begrenzt, die sich im wesentlichen quer zur Mittelachse 5a des Lüftungskanals 5 bzw. des Rohrabschnitts 11 erstreckt.

Durch diese Anordnung wird erreicht, daß jenseits der Gebäudewand 3 auftretende Schallwellen, die durch den Lüftungskanal 5 bzw. den Rohrabschnitt 11 in den Raum 2 gerichtet sind, zunächst nur bis in die Kammer 16 gelangen können. Die Querschnittsänderung (Erweiterung) bewirkt dabei eine erste Dämpfung. Die Frontplatte 19 ist - ebenso wie alle anderen Seitenwände der Kammer 16 - mit schallabsorbierendem Material 20 ausgekleidet. Zusätzlich kann vorgesehen werden, daß auf dem schallabsorbierenden Material 20 der Kammerinnenseite - nicht dargestellte - schallabsorbierende und/oder schallreflektierende Metallplatten angebracht sind, die den eindringenden Lärm dämmen,dämpfen und reflektieren. Um einen möglichst effektiven Schallabbau zu erreichen, ist dabei auch vorgesehen, daß die Frontplatte 19 aus einer nicht ebenen, z.B. konvex oder konkav gekrümmten, massiven Platte besteht. Beim Ausführungsbeispiel hat sie eine - vom Inneren der Kammer 16 aus betrachtet - nach auswärts gewölbte, also konkave Form. Dadurch werden evtl. vorhandene Eigenfrequenzen gemindert und die Schallreduzierung im Inneren der Kammer 16 begünstigt.

Beim dargestellten Ausführungsbeispiel wird die Trennwand 17 zur Abteilung des Belüftungs-Medienstromweges 15 vom Entlüftungs-Medienstromweg 18 in wesentlichen Teilen von einer Einrichtung zur Wärmerückgewinnung 25 gebildet. Bei dieser Einrichtung zur Wärmerückgewinnung 25 handelt es sich vorzugsweise um einen rekuperativ arbeitenden Wärmeübertrager, der eine Kreuzstrom-Bauart aufweist. Er besteht aus mindestens einem Lamellen- bzw. Plattenstapel 24, der aus einer größeren Anzahl von Einzellamellen bzw. -Platten 23 zusammengesetzt ist. Von diesen kann jede einen etwa C-förmigen Querschnitt aufweisen und, wie das in den Fig. 1, 4, 5 und 9 dargestellte Ausführungsbeispiel zeigt, einen etwa quadratischen Grundriß haben. Die Einzellamellen- bzw. -Platten 23 sind dabei möglichst dünnwandig ausgebildet und bestehen aus einem gut wärmeleitenden Werkstoff, beispielsweise Aluminium oder Kupfer. Die Einzellamellen bzw. -Platten 23 sind wechselseitig um eine normal zu ihrer Ebene gerichtete Achse jeweils um 90° gegeneinander verdreht aufeinandergelegt, so daß zwischen ihnen Durchströmkanäle 21 und 22 gebildet werden, die abwechselnd eine zueinander um 90° verdrehte Lage haben, damit die durch sie hindurchgeführten Luftströme sich in den in Schichtlage aufeinanderfolgenden Strömungskanälen 21 und 22 jeweils kreuzen.

Die bevorzugte und dargestellte Ausführungsform besteht aus dünnwandigen Profilabschnitten, die wie bereits vorbeschrieben, jeweils um 90° zueinander drehwinkel-versetzt angeordnet werden. Es ist möglich, innerhalb der Einrichtung zur Wärmerückgewinnung 25 bzw. des sie bildenden Plattenstapels 24 jeweils parallel zum Medienstromweg 15, 18 verlaufende Zwischenwände vorzusehen, die die Oberfläche der Einrichtung zur Wärmerückgewinnung 25 vergrößern und somit deren Wirkungsgrad erhöhen. Durch ihre Richtfunktion können sie aber auch die Ausbildung einer laminaren Strömung begünstigen.

Der Einrichtung zur Wärmerückgewinnung 25 ist im Belüftungs-Medienstromweg 15 ein Filterelement 26 vorgeordnet, welches die in den Raum 2 eingeführte Luft von schwebenden Schmutzpartikeln befreit.

Auch im Entlüftungs-Medienstromweg 18 ist der Einrichtung zur Wärmerückgewinnung 25 ein Filterelement 27 vorgelagert, das ebenso wie das Filterelement 26, eine Verschmutzung der Einrichtung zur Wärmerückgewinnung 25 durch aus dem Raum 2 abgesaugte Schmutzpartikel verhindert. Die Filterelemente 26, 27 sind sowohl für den Belüftungs-Medienstrom 15 als auch für den Entlüftungs-Medienstrom 18 im Ansaugweg von Zwangslüftungsvorrichtungen 28 bzw. 29 angeordnet. Dadurch wird erreicht, daß sowohl in den Filterelementen 26 und 27 als auch in der Einrichtung zur Wärmerückgewinnung 25 eine laminare Strömung vorliegt, die deren vollflächige Durchströmung gewährleistet. Unterstützt wird dies durch die in der Einrichtung zur Wärmerückgewinnung 25 angebrachten, (bereits erwähnten) Zwischenwände bzw. Längsstege, weil diese für eine weitere Ausrichtung des Belüftungs- und des Entlüftungs-Medienstroms (18) sorgen.

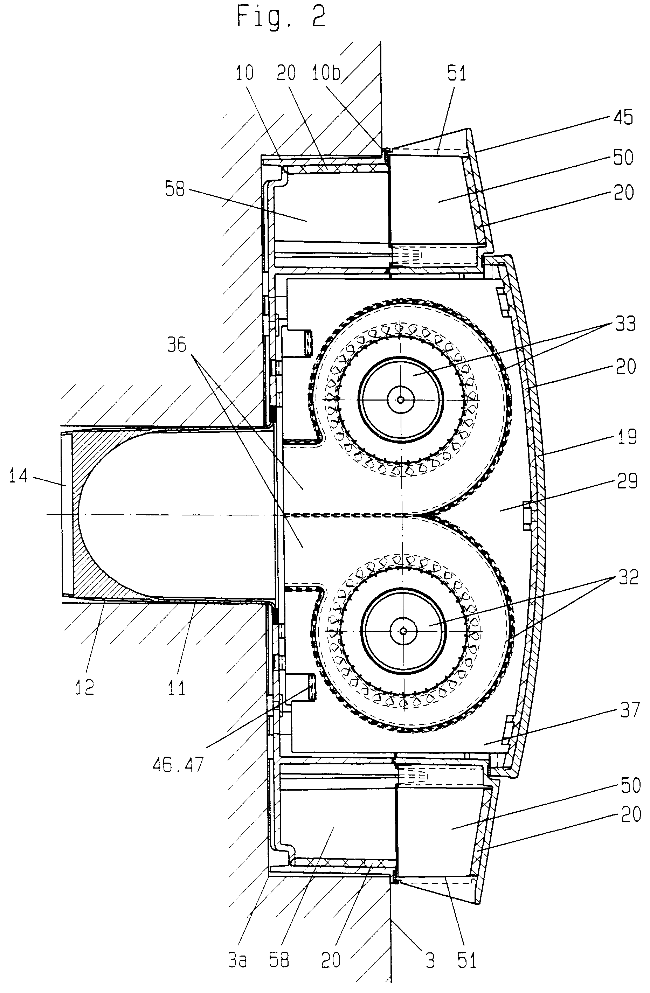

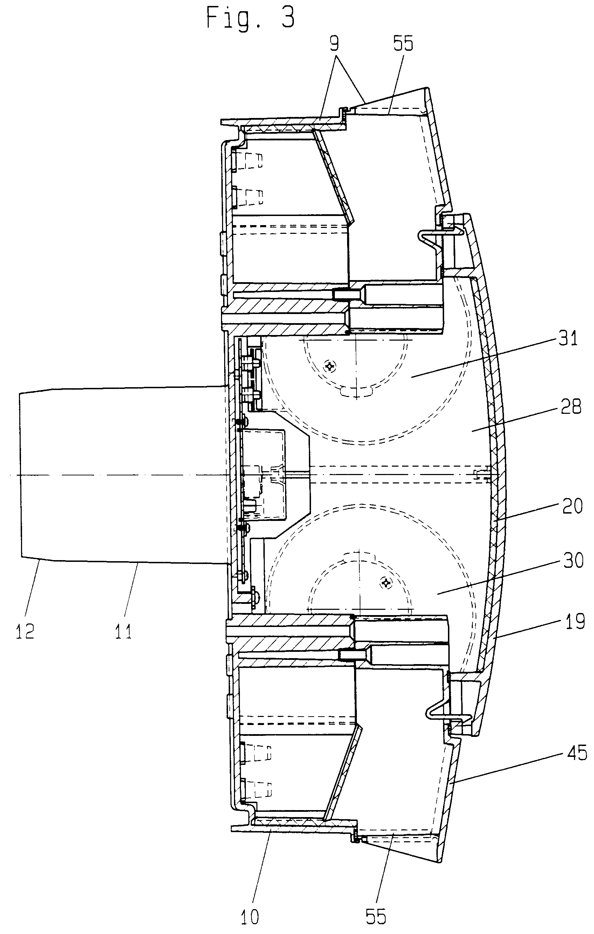

Die Zwangslüftungsvorrichtungen 28, 29 sind an den oberen, waagerechten Begrenzungswänden 42 und die Zwangslüftungsvorrichtungen 29 sind an den unteren waagerechten Begrenzungswänden 43 der Kammer 16 angeordnet, so daß sich jeweils eine größtmögliche Entfernung zu den Filterelementen 26, 27 und zu der Einrichtung zur Wärmerückgewinnung 25 ergibt. Daraus resultiert neben günstigen Strömungsverhältnissen auch eine längere Verweilzeit der Luftströmung mit der damit verbundenen besseren Erwärmung des zugeführten Belüftungs-Medienstroms 15 durch das gesamte Gehäuse 9. Wie insbesondere auch aus Fig. 2 und 3 hervorgeht, besteht jede der Zwangslüftungsvorrichtungen 28, 29 aus paarweise zusammenarbeitenden Gebläsen und zwar aus dem im Belüftungs-Medienstrom 15 angeordneten Gebläsepaar 30, 31 und dem im Entlüftungs-Medienstrom 18 angeordneten Gebläsepaar 32, 33.

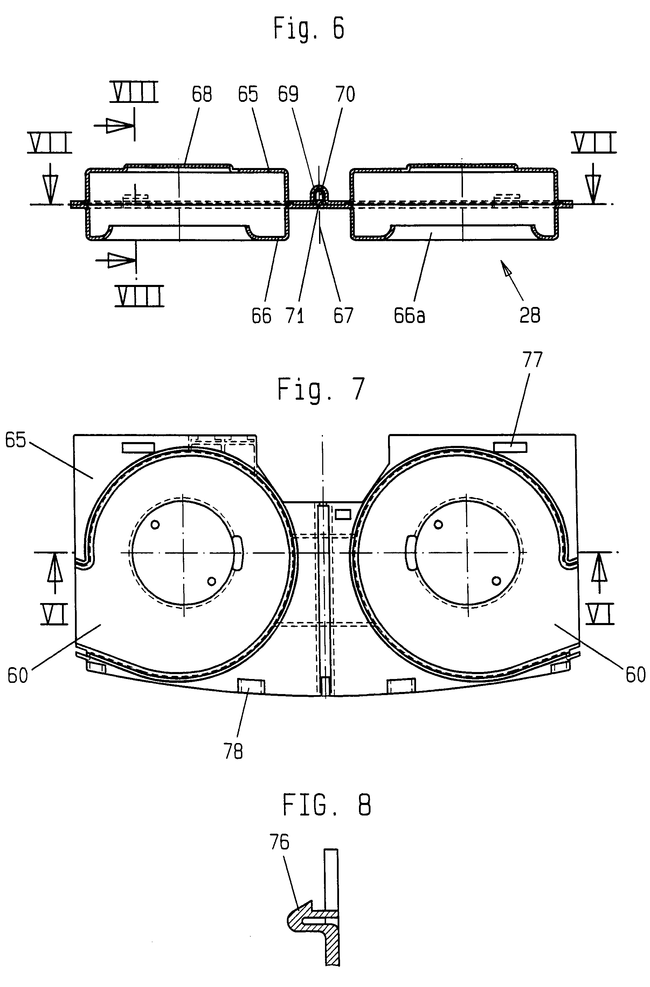

Wie die Fig. 2 und 7 zeigen, sind die Gebläse 30, 31 des Belüftungs-Medienstroms 15 oben im Gehäuse 9 so angeordnet, daß sie getrennte Ausblaskanäle 60 aufweisen, jedoch einen gemeinsamen Ansaugraum 34 haben. Demgegenüber besitzen die im Entlüftungs-Medienstrom 18 und unten im Gehäuse 9 angeordneten Gebläse 32, 33 sowohl einen gemeinsamen Ansaugraum 35 als auch einen gemeinsamen Ausblaskanal 36. Der Ausblaskanal 36 ist dabei idealerweise vom Rohrabschnitt 11 gebildet. Die Zwangslüftungsvorrichtungen 28, 29 sind jeweils unmittelbar in einem blockartigen Einsatzkörper 37 gelagert, der beispielsweise aus Schaumkunststoff oder Moosgummi gebildet ist. Dadurch werden die unvermeidlichen Eigengeräusche der Gebläse 30, 31 bzw. 32, 33 auf ein Minimum reduziert bzw. gedämmt, weil die Gebläsevibrationen nicht auf das Gehäuse 9 übertragen werden. Durch die Ausgestaltung als Doppelgebläse bzw. Gebläsepaare 30/31 bzw. 32/33 wird darüber hinaus erreicht, daß bei gleichem Volumenstrom die Gebläse 30, 31, 32, 33 mit relativ geringer Drehzahl arbeiten können. Der hiermit erzeugte Volumenstrom ist jedoch gegenüber einem üblicherweise einzusetzenden doppelt so groß bemessenen Einzel-Gebläse ungleich größer.

Die Zwangslüftungsvorrichtungen 28, 29 können in dem Gehäuse 9 schubladenartig - ohne zusätzliche Befestigungsmittel - gelagert werden. Dies wird erreicht durch Schaffung von zur Rauminnenseite offenen Fächern 48, 49 innerhalb des Gehäuses 9, in die sich die einteilig ausgebildeten Zwangslüftungsvorrichtungen 28, 29 einschieben lassen.

Die Stromversorgung der Zwangslüftungsvorrichtungen 28, 29 erfolgt, wie im folgenden noch genauer beschrieben wird, durch an der Rückwand des Gehäuses 9 angebrachte Kontaktstellen 46 die mit an den Zwangslüftungsvorrichtungen 28, 29 angebrachten Kontaktfedern 47 zusammenwirken. Sie wird also kabellos verwirklicht, , so daß die Zwangslüftungsvorrichtungen 28, 29 mühelos dem geöffneten Gehäuse 9 entnommen werden können. Die Anordnung der Kontaktstellen 46 ist dabei in ansich bekannter Art und Weise so gewählt, daß die Zwangslüftungsvorrichtungen 28, 29 nur in ordnungsgemäßer Einbaulage mit Strom versorgt werden, so daß eine evtl. mögliche Fehlmontage folgenlos bleibt.

Auch die Einrichtung zur Wärmerückgewinnung 25 kann zur Wartungszwecken aus dem Gehäuse 9 entnommen werden. Hierzu wird zunächst die schwenkbar am Gehäuse 9 gelagerte Frontplatte 19 um eine untere waagerechte Achse verschwenkt, so daß die Kammer 16 raumminnenseitig offen ist. Die Einrichtung zur Wärmerückgewinnung 25 25 ist zusammen mit den Filterelementen 26 und 27 auf einem Rahmen 38 montiert, der um eine Lagerachse 39 schwenkbar ist. Die Lagerachse 39 ist dabei als Rast-Schnappverbindung wirksam, so daß der Rahmen 38 insgesamt aus dem Gehäuse 9 entnommen werden kann. Der Rahmen 38 hat Begrenzungen 40 die im geschlossenen Zustand der Frontplatte 19 an entsprechende Dichtstellen 41 des Gehäuses 9 und der Frontplatte 19 stoßen.

Die insbesondere aus den Fig. 1, 4, 5 und 9 ersichtlichen Filterelemente 27, 26 können, unterschiedliche Ausgestaltung haben. So ist das Filterelement 26, welches im Belüftungs-Medienstrom 15 liegt, mit einem höheren Abscheidegrad ausgestattet als das Filterelement 27 für den Entüftungs-Medienstrom 18.

Die Filterelemente 26, 27 sind lösbar an dem Rahmen 38 befestigt, wobei zumindest das Filterelement 26 für den Belüftungs-Medienstrom 15 von der Einrichtung zur Wärmerückgewinnung 25 beabstandet ist. Dadurch wird erreicht, daß das gesamte Filterelement 26 durchströmt wird. Bei einer Anordnung desselben direkt auf der Einrichtung zur Wärmerückgewinnung 25 würden hingegen, die mit deren luftundurchlässigen Randabschnitten zusammentreffenden Filterabschnitte einen hohen Druckverlust mit sich bringen.

Wie aus den Horizontalschnitten der Fig. 2 und 3 hervorgeht, ist die Frontplatte 19 im Querschnitt nach außen gekrümmt ausgeführt und auf ihrer Innenseite mit Dämmaterial 20 belegt. In diesen Darstellungen ist auch zu erkennen, daß das Gehäuse 9 aus einem wannenartigen Grundkörper 10 besteht, auf dem ein Rahmen 45 lösbar befestigt ist. Alle senkrecht zur Gehäuse-Hauptebene verlaufenden Begrenzungswände des Grundkörpers 10 sind geschlossen, so daß im Bedarfsfall die Montage der Lüftungsvorrichtung 1 auch zumindest teilweise in einer - in Fig. 2 mit strichpunktierten Linien angedeuteten - Nische 3a der Gebäudewand 3 erfolgen kann. Der Rahmen 45 und der Grundkörper 10 sind über mit Dichtungen 10a versehenen Flanschen 10b verbunden und mit - nicht dargestellten - Befestigungselementen, z.B. Schrauben, aneinander befestigt.

Bei einer Befestigung der Lüftungsvorrichtung 1 entsprechend der Fig. 2 wird der Rahmen 45 vom Grundkörper 10 gelöst. Der Grundkörper 10 wird in der Wandnische 3a befestigt und erst dann wird der Rahmen 45 bündig mit der Wandoberfläche an die Gebäudewand 3 angelegt. Der Rahmen 45 kann anschließend am Grundkörper 10 befestigt werden.

In der Horizontalschnitt-Darstellung gemäß Fig. 2 ist auch erkennbar, daß die Stromversorgung der Zwangslüftungsvorrichtung 28 über eine an der Rückwand des Gehäuses 9 befe,stigte Kontaktstelle 46 vorgenommen wird, die mit dazu passend angeordneten Kontaktfedern 47 zusammenwirkt, wie das oben bereits beschrieben ist.

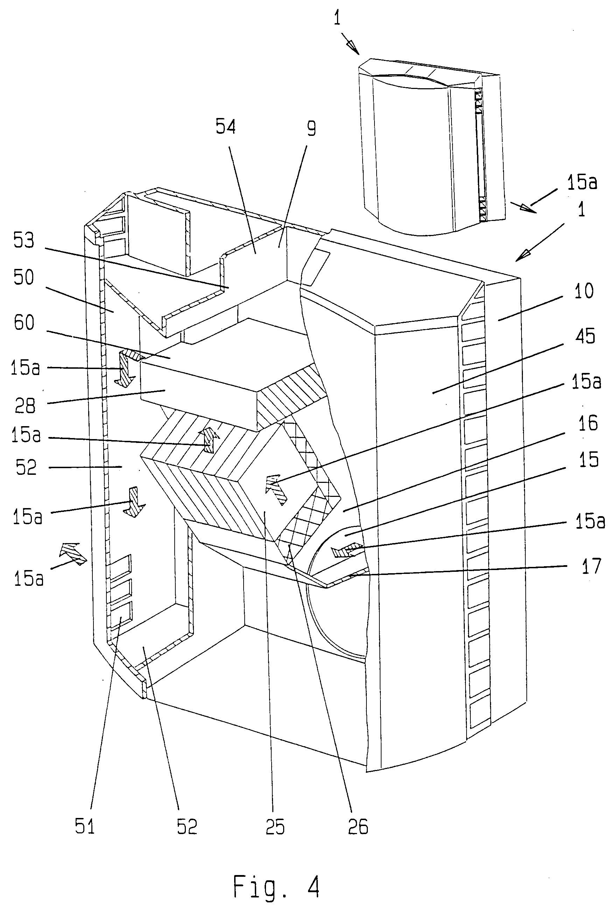

Fig. 4 zeigt den innerhalb des Gehäuses 9 vorgesehenen Verlauf des Belüftungs-Medienstromwegs 15 anhand einer Raumform-Prinzipdarstellung der Lüftungsvorrichtung 1. Der Belüftungs-Medienstrom 15 kommt dabei von dem - in dieser Darstellung nicht sichtbaren - Strömungskanal 8 im Durchbruch 4 der Gebäudewand 3 durch den ebenfalls nicht gezeigten Rohrabschnitt 11 und gelangt in die Kammer 16. Von dort aus folgt er mit einer Vielzahl von Umlenkungen einem durch die schraffierten Pfeile 15a gekennzeichneten Weg. Der Belüftungs-Medienstrom 15 wird in der Kammer 16 zunächst von dem Entlüftungs-Medienstrom 18 durch die Trennwand 17 getrennt, wonach er in Aufwärtsrichtung durch das Filterelement 26 und die Einrichtung zur Wärmerückgewinnung 25 führt. Von dort aus gelangt weiter in Aufwärtsrichtung zur Saugseite der an der oberen waagerechten Begrenzungswand 42 der Kammer 16 angeordneten Zwangslüftungsvorrichtung 27. Darin wird durch die beiden Gebläse 30 und 31 der Volumenstrom hälftig geteilt. Eine erste Hälfte des Volumenstroms wird dabei - wie gezeigt - nach links abgelenkt und in einen nach abwärts führenden Schacht 50 geleitet. Die zweite Hälfte des Volumenstroms wird in dazu spiegelsymmetrischer Richtung nach rechts geleitet, was aber in Fig. 4 nicht sichtbar ist. Am unteren Ende jedes Schachtes 50 sind seitliche Austrittsöffnungen 51 angebracht, durch die der Belüftungs-Medienstrom 15 dann in das Rauminnere gelangt.

Es ist in der Fig. 4 anhand der Pfeile 15a deutlich erkennbar, daß der Belüftungs-Medienstromweg 15 mehrfach abgeknickt verläuft und die Mehrzahl seiner Umlenkungen nahezu rechtwinklig erfolgt. Dadurch wird gewährleistet, daß von außen her eindringende, und/oder im Geräteinneren erzeugte Schallwellen weitestgehend an Energie verlieren.

Aus der Fig. 4 wird auch deutlich, daß die Einrichtung zur Wärmerückgewinnung 25 zwischen dem Filterelement 26 und der Zwangslüftungsvorrichtung 28 angeordnet ist, wodurch - wie bereits beschrieben - zuverlässig eine Verschmutzung der demgegenüber im Belüftungs-Medienstromweg 15 stromabwärts gelegenen Baugruppen verhindert wird.

Der an jeder Seite des Gehäuses 9 und außen an der Kammer 16 entlangführende Schacht 50 ist mit schallabsorbierendem Material 20 ausgekleidet, wobei eine Auskleidung an den Außenwänden 52 zur Vermeidung der Übertragung von Körperschall im allgemeinen schon ausreicht. Zu Wartungszwecken, z.B. zum Austausch des verschmutzten schallabsorbierenden Materials 20, ist der Schacht 50 durch Abnehmen des Rahmens 45 von dem Grundkörper 10 zugänglich.

Der Fig. 4 kann auch entnommen werden, daß oberhalb der durch die Wand 53 und die nach oben geschloßen ausgeführte Zwangslüftungsvorrichtung 28 abgetrennten Kammer 16 eine zweite Kammer 54 etwa mittig im Gehäuse 9 entsteht. Hierin können die zur Steuerung bzw. Regelung der Lüftungsvorrichtung 1 notwendigen elektrischen Bauteile sowie auch die Bedien- und Anzeigeinstrumente angeordnet werden, welche aber nicht dargestellt sind.

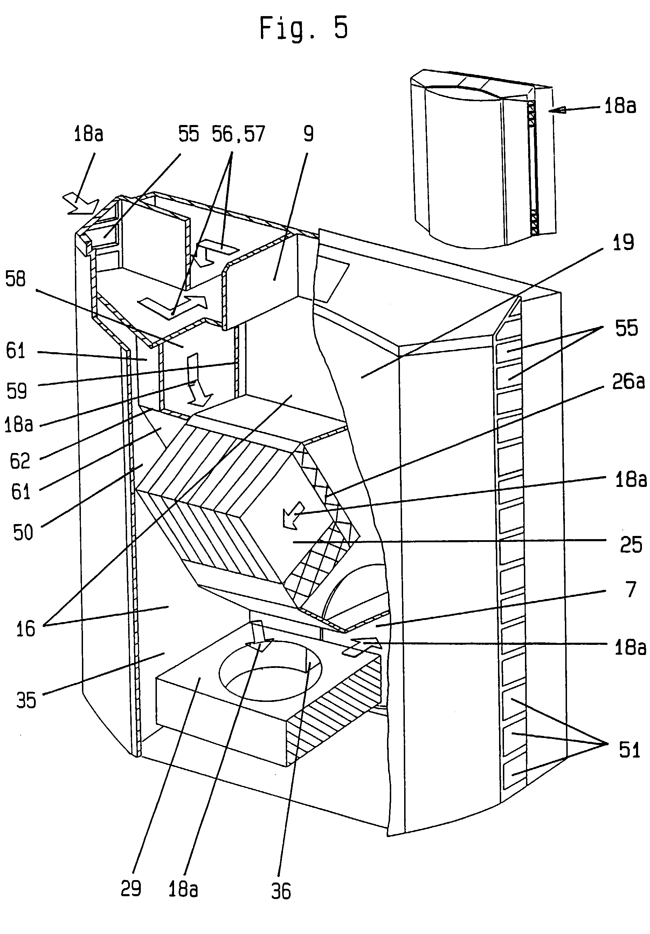

In Fig. 5 ist der innerhalb des Gehäuses 9 vorgesehene Verlauf des Entlüftungs-Medienstroms 18 ebenfalls in einer Raumform-Prinzipdarstellung erkennbar. Er führt über Lüfteintrittsöffnungen 55 oben in das Innere des Gehäuses 9 , wie die offenen Pfeile 18a deutlich machen. Mit zwei folgenden rechtwinkligen Abwinkelungen 56, 57 geht er in einen senkrechten Schacht 58, der hinter dem Schacht 50 angeordnet ist, also ebenfalls außen an der Kammer 16 entlang geführt. Der in dieser Darstellung geschnittene Schacht 58 mündet an den lotrecht verlaufenden Begrenzungswänden 59 durch - hier nicht sichtbare - Öffnungen in die Kammer 16 ein. Das Filterelement 27 zum Schutz der im Entlüftungs-Medienstromweg 18 nachfolgend angeordneten Einrichtung zur Wärmerückgewinnung 25 wird von der Rückwand des Gehäuses 9 aus zur Frontplatte 19 hin durchströmt, wobei der Entlüftungs-Medienstrom 18 in den Ansaugraum 35 unterhalb der Trennwand 17 gelangt. Der Entlüftungs-Medienstromweg 18 führt hieraus - durch die Zwangslüftungsvorrichtung 29 angetrieben - in den Strömungskanal 7 der die Lüftungsvorrichtung 1 mit der Außenluft verbindet.

Die Fig. 5 macht durch die Pfeile 18a deutlich, daß auch der Entlüftungs-Medienstrom 18 an mehreren Stellen - zumeist rechtwinklig - abgeknickt verläuft. Die Zwangslüftungsvorrichtung 29 ist so angeordnet, daß der Ausblaskanal 36 beider Gebläse 32 und 33 parallel zur Mittelachse 5a des - hier nicht sichtbaren - Lüftungkanals 5 verläuft.

Wie bereits erwähnt worden ist, zeigen die Fig. 4 und 5 jeweils lediglich die eine Hälfte des Belüftungs-Medienstroms 15 und des Entlüftungs-Medienstroms 18, wobei dessen zweite Hälfte spiegelbildlich zur lotrechten Mittelebene des Lüftungsgerätes 1 geführt ist.

Aus den Fig. 4 und 5 wird auch die unterschiedliche Anordnung der Zwangslüftungsvorrichtung 28 für den Belüftungs-Medienstrom 15 und der Zwangslüftungsvorrichtung 29 für den Entlüftungs-Medienstrom 18 deutlich. Während die Ausblaskanäle 60 der Zwangslüftungsvorrichtung 28 voneinander wegweisen - zur Schmalseite des Gehäuses 9 hin -, sind die Ausblaskanäle 36 der Zwangslüftungsvorrichtung 29 richtungsgleich nebeneinander vorgesehen.

Bei der Betrachtung der Fig. 4 und 5 wird auch erkennbar, daß die Zwangslüftungsvorrichtungen 28, 29 sowohl im Belüftungs-Medienstrom 15 als auch im Entlüftungs-Medienstrom 18 eine Anordnung haben, bei der der Ansaugweg derselben - innerhalb des Gehäuses 9 der Lüftungsvorrichtung 1 - jeweils länger bemessen ist als der Ausblasweg. Mit dieser Anordnung wird erreicht, daß die beim Betrieb der Zwangslüftungsvorrichtungen 28, 29 entstehenden Eigengeräusche der Gebläse 30, 31 und 32, 33 eine maximale Dämpfung erfahren.

Der Grundkörper 10 und der Rahmen 45 des Gehäuse 9 sind als Kunststoff-Spritzgußteile ausgeführt, wodurch sich eine maßgenaue und preisgünstige Herstellung ergibt. Um das Entformen des Grundkörpers 10 ermöglichen ist die Wand 61 des Schachtes 58 bzw. des Schachtes 50 lose ausgeführt, d.h. die Wand 61 wird erst bei der Montage des Rahmens 45 auf dem Grundkörper 10 eingesetzt. Dies ermöglicht somit auch eine Reinigung der im Entlüftungs-Medienstromweg 18 gelegenen Strömungskanäle, die nicht direkt zugänglich sind. Eine bevorzugte Ausführung sieht dabei vor, daß die Wand 61 aus einem paßgenauen, mit Schalldämmaterial allseitig umschlossenen und mit einer Knickfalte 62 versehenen Pappabschnitt besteht. Dieser kann bei einer evtl. Wartung des Gerätes einfach aus diesem entnommen und durch einen neuen Abschnitt ersetzt werden.

Die bevorzugte Ausführung aller anderen Schalldämmauskleidungen innerhalb der Medienstromwege ist auf übereinstimmende Art und Weise vorgenommen.

Die Fig. 6 und 7 zeigen das Ausführungsbeispiel der Zwangslüftungsvorrichtung 28 ohne die elektrischen Antriebe und ohne Lüfterräder der Gebläse 32, 33. Die Zwangslüftungsvorrichtung 28 besteht dabei aus einer oberen und einer unteren Gehäusehälfte 65, 66. Dabei sind die Gehäusehälften 65, 66 zu ihrer Quermittelachse 67 symmetrisch ausgebildet. Die - nicht dargestellten - Gebläsemotoren werden auf dem Boden 68 der oberen Gehäusehälfte 65 befestigt. Die als Radiallüfter ausgebildeten Gebläse 32 und 33 saugen über die Öffnung 66a an und blasen seitlich aus, wobei die Ausblasrichtungen spiegelsymmetrisch zur Quermittelachse 67 und voneinander weg verlaufen.

Längs der Quermittelachse 67 verläuft eine Führung 69, die durch eine oben offene Nut 70 in der oberen Gehäusehälfte 65 und durch einen Vorsprung 71 an der unteren Gehäusehälfte 66 gebildet wird. In dieser Führung 69 ist, wie dies Fig. 1 zeigt, eine Schubstange 72 längsverschiebbar geführt, welche am einen Ende 73 mit der Frontplatte 19 zusammenwirkt, während sie mit dem anderen Ende 74 auf einen Tastschalter 75 trifft. Durch diese Anordnung wird die gesamte Stromzufuhr der Lüftungsvorrichtung 1 unterbrochen, wenn die Frontplatte 19 zu Wartungszwecken geöffnet wird.

Die Fixierung der unteren Gehäusehälfte 66 auf der oberen Gehäusehälfte 65 erfolgt durch an die oberen Gehäusehälfte 65 angeformte Rasthaken 76, wie sie Fig. 8 zeigt. Diese Rasthaken 76 greifen im montierten Zustand in Ausnehmungen 77 und verriegeln eine Schwenklagerung. Diese wird durch seitlich offene Längsösen 78 der unteren Gehäusehälfte 66 und in diese eingreifende Lappen der oberen Gehäusehälfte 65 die hier nicht dargestellt ist, gebildet.

Die Zwangslüftungsvorrichtung 29 ist in dazu äquivalenter Weise ausgestattet. Sie weist jedoch nicht die Führung 69 auf und besitzt die bereits beschriebene, andere Ausblasrichtung.

Beide Zwangslüftungsvorrichtungen 28 und 29 sind, wie mehrfach hervorgehoben ist, durch zumindest eine teilweise Umhüllung mit Schalldämmaterial zur Vermeidung von Körperschallübertragungen ausgestattet.

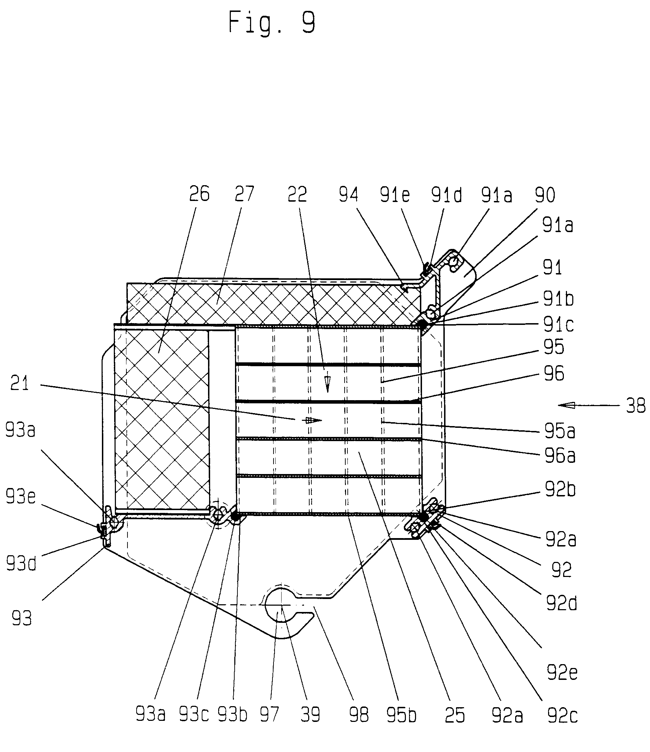

Fig. 9 zeigt die Einrichtung zur Wärmerückgewinnung 25 in einem Querschnitt und in allen Einzelheiten. Zwischen zwei Seitenwangen 90 sind Profilstäbe 91, 92, 93 durch - hier nicht dargestellte - Befestigungsschrauben befestigt, die in Schraubkanäle 91a, 92a und 93a eindringen. Der Profilstab 91 weist einen hakenförmigen Arm 94 auf, mit dem das Filterelement 27 an dem Rahmen 38 befestigt ist. Das Filterelement 26 wird durch den Profilstab 93 und das Filterelement 27 gehalten. Die Einrichtung zur Wärmerückgewinnung 25 selbst besteht, wie bereits oben beschrieben ist, aus den jeweils um 90° zueinander verdreht angeordneten Profilabschnitten 95, 96, wobei jeder Profilabschnitt 95, 96 längsverlaufende Stege 95a, 96a besitzt. Die Profilabschnitte 95, 96 werden über den von den Profilstäben 91, 92, 93 und den Seitenwangen 90 gebildeten Rahmen 38 dadurch befestigt, daß ihre Seitenkanten in Längsnuten 91b, 92 und 93b der Profilstäbe 91, 92, 93 einsitzen. Zusätzlich sind hier Dichtungen 91c, 92c und 93c angebracht.

Die Profilstäbe 91, 92, 93 weisen auch noch in Längsnuten 91d, 92d, 93d einsitzende Dichtungen 91e, 92e, 93e auf, die in bekannter Art und Weise mit den bereits weiter vorne anhand der Fig. 1 erwähnten Dichtstellen 41 des nicht dargestellten Gehäuses bzw. Frontplatte 19 zusammenwirken.

Die Seitenwangen 90 sind im dargestellten Ausführungsbeispiel mit einem Bohrung 97 versehen, an das sich eine seitliche Öffnung 98 anschließt. Der Mittelpunkt der Bohrung 97 bildet dabei eine Lagerachse 39, um die, wie bereits beschrieben, der gesamte Rahmen 38 schwenkbar gelagert ist. Die Lagerachse 39 im Gehäuse 9 kann durch einen endnah an seinen Mantelflächen abgeflachten Zylinderstab gebildet werden, der etwa den Durchmesser 99 des Loches 97 besitzt. Im Bereich der Abflachungen entspricht sein Querschnitt etwa der Breite 98a der Öffnung 98, wodurch auf einfache Weise eine Art Bajonettverschluß entsteht, über den der Rahmen 38 in dem Gehäuse 9 unverrückbar befestigt werden kann.

### BEZUGSZEICHENLISTE

- 1: Lüftungsvorrichtung
- 2: Raum
- 3: Gebäudewand
- 3a: Nische
- 4: Durchbruch
- 5: Lüftungskanal
- 5a: Mittelachse
- 6: Trennwand
- 7: Strömungskanal
- 8: Strömungskanal
- 9: Gehäuse
- 10: Grundkörper
- 11: Rohrabschnitt
- 12: freies Ende
- 13: Trennwand
- 14: konische Nut
- 15: Belüftungs-Medienstrom
- 16: Kammer
- 17: Trennwand
- 18: Entlüftungs-Medienstrom
- 19: Frontplatte
- 20: Dämmaterial
- 21: Durchströmkanäle
- 22: Durchströmkanäle
- 23: Einzellamellen bzw. -Platten
- 24: Plattenstapel
- 25: Einrichtung zur Wärmerückgewinnung
- 26: Filterelement
- 27: Filterelement
- 28: Zwangslüftungsvorrichtung
- 29: Zwangslüftungsvorrichtung
- 30: Gebläse
- 31: Gebläse
- 32: Gebläse
- 33: Gebläse
- 34: Ansaugraum
- 35: Ansaugraum
- 36: Ausblaskanäle
- 37: Einsatzkörper
- 38: Rahmen
- 39: Lagerachse
- 40: Begrenzungen
- 41: Dichtstellen
- 42: Begrenzungswand, oben
- 43: Begrenzungswand, unten
- 44:
- 45: Rahmen
- 46: Kontaktstelle
- 47: Kontaktfeder
- 48: Fach
- 49: Fach
- 50: Schacht
- 51: Austrittsöffnungen
- 52: Außenwände
- 53: Wand
- 54: Kammer
- 55: Lufteintrittsöffnung
- 56: Abwinklung
- 57: Abwinklung
- 58: Schacht
- 59: lotrechte Begrenzungswände
- 60: Ausblaskanäle
- 61: Wand
- 62: Knickfalte
- 63:
- 64:
- 65: obere Gehäusehälfte
- 66: untere Gehäusehälfte
- 66a: Öffnung
- 67: Quermittelachse
- 68: Boden
- 69: Führung
- 70: Nut
- 71: Vorsprung
- 72: Schubstange
- 73: Ende
- 74: Ende
- 75: Tastschalter
- 90: Seitenwange
- 91: Profilstab
- 91a: Schraubkanal
- 91b: Nut
- 91c: Dichtung
- 91d: Nut
- 91e: Dichtung
- 91: Profilstab
- 92a: Schraubkanal
- 92b: Nut
- 92c: Dichtung
- 92d: Nut
- 92e: Dichtung
- 93: Profilstab
- 93a: Schraubkanal
- 93b: Nut
- 93c: Dichtung
- 93d: Nut
- 93e: Dichtung
- 94: hakenförmigen Arm
- 95: Profilabschnitt
- 95a: Steg
- 96: Profilabschnitt
- 96a: Steg
- 97: Bohrung
- 98: Öffnung
- 98a: Breite
- 99: Durchmesser

## Patentansprüche

1. Lüftungsvorrichtung zum gleichzeitigen Be- und Entlüften von Räumen
insbesondere mit einer Einrichtung zur Wärmerückgewinnung (25) aus dem Entlüftungs-Medienstrom (18),
mit einem Gehäuse, das - beispielsweise rauminnenseitig - an oder in einer Gebäudewand (3) angeordnet sowie an je einen zur Außenluft führenden Lüftungskanal (5) für den Be- und den Entlüftungs-Medienstrom (18) anschließbar ist,
wobei innerhalb des Gehäuses zwei voneinander getrennte Strömungswege ausgebildet sind,
wobei je eine Zwangslüftungsvorrichtung (28, 29) für den Be- und den Entlüftungs-Medienstrom (15, 18) vorgesehen ist,
und wobei sowohl im Be- als auch in dem Entlüftungs-Medienstrom (15, 18) Filterelemente (26, 27) vorgesehen sind,
dadurch gekennzeichnet,
daß die Zwangslüftungsvorrichtungen (28, 29) sowohl im Be- als auch im Entlüftungs-Medienstrom (15, 18) eine Anordnung haben, bei der der Ansaugweg der jeweiligen Zwangslüftungsvorrichtung (28, 29) - innerhalb des Gehäuses (9) der Lüftungsvorrichtung (1) - länger bemessen ist als der Ausblasweg.

2. Lüftungsvorrichtung zum gleichzeitigen Be- und Entlüften von Räumen insbesondere nach Anspruch 1,
dadurch gekennzeichnet,
daß der das Gehäuse (9) der Lüftungsvorrichtung (1) mit der Außenluft verbindende Lüftungskanal (5) zumindest im Bereich des Belüftungs-Medienstroms (15) in eine einen größeren Querschnitt aufweisende Kammer (16) des Gehäuses (9) mündet, die - durch zumindest eine Trennwand (17) in den Belüftungs-Medienstrom (15) und Entlüftungs-Medienstrom (18) geteilt - eine nahezu senkrecht zur Mittelachse (5a) des Lüftungskanals (5) verlaufende Frontplatte (19) aufweist.

3. Lüftungsvorrichtung zum gleichzeitigen Be- und Entlüften von Räumen nach einem der Ansprüche 1 bis 2,
dadurch gekennzeichnet,
daß das Filterelement (26, 27) sowohl für den Belüftungs-Medienstrom (15) als auch für den Entlüftungs-Medienstrom (18) im jeweiligen Ansaugweg der Zwangslüftungsvorrichtung (28 oder 29) angeordnet ist.

4. Lüftungsvorrichtung zum gleichzeitigen Be- und Entlüften von Räumen nach einem der Ansprüche 1 bis 3,
dadurch gekennzeichnet,
daß die Einrichtung zur Wärmerückgewinnung (25) jeweils zwischen dem dem jeweiligen Medienstrom (15 bzw. 18) zugeordneten Filterelement (26, 27) und der Zwangslüftungsvorrichtung (28, 29) angeordnet ist.

5. Lüftungsvorrichtung zum gleichzeitigen Be- und Entlüften von Räumen nach einem der Ansprüche 1 bis 4,
dadurch gekennzeichnet,
daß das Filterelement (26) des Belüftungs-Medienstroms (15) einen anderen Abscheidgrad aufweist, als das Filterelement (27) des Entlüftungs-Medienstroms (18).

6. Lüftungsvorrichtung zum gleichzeitigen Be- und Entlüften von Räumen nach einem der Ansprüche 1 oder 2,
dadurch gekennzeichnet,.
daß jede Zwangslüftungsvorrichtung (28, 29) aus zwei Gebläsen besteht (30, 31 bzw. 32, 33), wobei die im Belüftungs-Medienstrom (15) angeordneten Gebläse (30, 31) getrennte Ausblaskanäle (36) aufweisen, während die im Entlüftungs-Medienstrom (18) angeordneten Gebläse (32, 33) einen gemeinsamen Ausblaskanal (36) besitzen,

7. Lüftungsvorrichtung zum gleichzeitigen Be- und Entlüften von Räumen nach einem der Ansprüche 1 bis 6,
dadurch gekennzeichnet,
daß sowohl der Belüftungs-Medienstromweg (15) als auch der Entlüftungs-Medienstromweg (18) mehrfach, z.B. orthogonal, abgeknickt sind, wobei zumindest die der Rauminnenseite zugewandten Abschnitte der Medienstromwege (15 und 18) mit schallabsorbierendem Material (20) ausgekleidet sind.

8. Lüftungsvorrichtung zum gleichzeitigen Be- und Entlüften von Räumen nach einem der Ansprüche 1 bis 7,
dadurch gekennzeichnet,
daß die Frontplatte (19) - ebenso wie alle anderen Seiten der Kammer (16) - mit schallabsorbierendem Material (20) ausgekleidet ist.

9. Lüftungsvorrichtung zum gleichzeitigen Be- und Entlüften von Räumen nach einem der Ansprüche 1 bis 8,
dadurch gekennzeichnet,
daß die Frontplatte (19) vorzugsweise eine nicht ebene, z.B. gekrümmten Platte ist, die zur Kammerinnenseite mit schallabsorbierendem Dämmaterial (20) belegt ist und ggf. darauf angeordnete schallabsorbierende und/oder schallreflektierende Metallplatten trägt.

10. Lüftungsvorrichtung zum gleichzeitigen Be- und Entlüften von Räumen nach einem der Ansprüche 1 bis 9,
dadurch gekennzeichnet,
daß die Zwangslüftungsvorrichtungen (28, 29) an den oberen und unteren waagerechten Begrenzungswänden (42 und 43) der Kammer (16) angeordnet sind.

11. Lüftungsvorrichtung zum gleichzeitigen Be- und Entlüften von Räumen nach einem der Ansprüche 1 bis 10,
dadurch gekennzeichnet,
daß die Zwangslüftungsvorrichtungen (28, 29) unmittelbar in einem blockartigen Einsatzkörper (37) aus Schalldämmaterial, beispielsweise Schaumkunststoff oder Moosgummi, gelagert sind.

12. Lüftungsvorrichtung zum gleichzeitigen Be- und Entlüften von Räumen nach einem der Ansprüche 1 bis 11,
dadurch gekennzeichnet,
daß die die Kammer (16) in den Belüftungs-Medienstrom (15) und Entlüftungs-Medienstrom (18) teilende Trennwand (17) hauptsächlich durch die Einrichtung zur Wärmerückgewinnung (25) gebildet ist.

13. Lüftungsvorrichtung zum gleichzeitigen Be- und Entlüften von Räumen nach einem der Ansprüche 1 bis 12,
dadurch gekennzeichnet,
daß die Einrichtung zur Wärmerückgewinnung (25) schwenkbar in dem Gehäuse (9) gelagert ist.
wobei die Lagerachse (39) eine z.B. bajonettartige Verriegelung bildet, über die die Einrichtung zur Wärmerückgewinnung (25) lösbar in dem Gehäuse (9) gehalten ist.

14. Lüftungsvorrichtung zum gleichzeitigen Be- und Entlüften von Räumen nach einem der Ansprüche 1 bis 13,
dadurch gekennzeichnet,
daß das Filterelement (26) im Belüftungs-Medienstromweg (15) von der Einrichtung zur Wärmerückgewinnung (25) beabstandet ist während das Filterelement (27) im Entlüftungs-Medienstromweg (18) nahezu unmittelbar an der Einrichtung zur Wärmerückgewinnung (25) angeordnet ist.

15. Lüftungsvorrichtung zum gleichzeitigen Be- und Entlüften von Räumen nach einem der Ansprüche 1 bis 14,
dadurch gekennzeichnet,
daß das Filterelement (26 bzw. 27) des Belüftungs-Medienstroms (15) und Entlüftungs-Medienstroms (18) lösbar mit der Einrichtung zur Wärmerückgewinnung (25) verbunden sind.

16. Lüftungsvorrichtung zum gleichzeitigen Be- und Entlü£ten von Räumen nach einem der Ansprüche 1 bis 15,
dadurch gekennzeichnet,
daß die eine Prallwand bildende Frontplatte (19) schwenkbar am Gehäuse (9) gelagert ist.

17. Lüftungsvorrichtung zum gleichzeitigen Be- und Entlüften von Räumen nach einem der Ansprüche 1 bis 16,
dadurch gekennzeichnet,
daß die Zwangslüftungsvorrichtungen (28, 29) schubladenartig - ohne zusätzliche Befestigungsmittel - im Gehäuse (9) in Fächern (48 und 49) formschlüssig gelagert sind, wobei die elektrische Stromversorgung über an der Rückwand des Gehäuses (9) angebrachte Kontaktstellen (46) und Kontaktfedern (47) - kabellos - erfolgt.

18. Lüftungsvorrichtung zum gleichzeitigen Be- und Entlüften von Räumen nach einem der Ansprüche 1 bis 17,
dadurch gekennzeichnet,
daß das Gehäuse (9) aus einem wannenartigen Grundkörper (10) besteht, auf dem ein Rahmen (45) lösbar befestigt ist, wobei alle senkrecht zur Hauptebene verlaufenden Begrenzungswände des Grundkörpers (10) geschlossen sind.

19. Lüftungsvorrichtung zum gleichzeitigen Be- und Entlüften von Räumen nach einem der Ansprüche 1 bis 18,
dadurch gekennzeichnet,
daß an dem wannenartigen Grundkörper (10) ein Rohrabschnitt (11) - der entsprechend dem Lüftungskanal (5) in einer waagerechten Ebene eine Längstrennwand (13) aufweist - fest angeflanscht und mit dem Lüftungskanal (5) kuppelbar ist.

20. Lüftungsvorrichtung zum gleichzeitigen Be- und Entlüften von Räumen nach einem der Ansprüche 1 bis 19,
dadurch gekennzeichnet,
daß sich der Rohrabschnitt (11) zu seinem freien Ende (12) hin im Außendurchmesser konisch verjüngt, während die Trennwand (13) in einer sich konisch öffnenden Nut (14) endet.

21. Lüftungsvorrichtung zum gleichzeitigen Be- und Entlüften von Räumen nach einem der Ansprüche 1 bis 20,
dadurch gekennzeichnet,
daß die Einrichtung zur Wärmerückgewinnung (25) als rekuperativ arbeitender Kreuzstrom-Wärmetauscher ausgebildet ist.

22. Lüftungsvorrichtung zum gleichzeitigen Be- und Entlüften von Räumen nach einem der Ansprüche 1 bis 21,
dadurch gekennzeichnet,
daß der Kreuzstrom-Wärmetauscher (25) aus einem Paket von C-förmigen Profilabschnitten (95, 96) besteht, die wechselseitig um eine normal zu ihrer Ebene gerichtete Achse jeweils um 90° gegeneinander verdreht sind.

23. Lüftungsvorrichtung zum gleichzeitigen Be- und Entlüften von Räumen nach einem der Ansprüche 1 bis 22,
dadurch gekennzeichnet,
daß die Profilabschnitte (95, 96) parallel zu den Längswänden (95b) verlaufende Stege (95a, 96a) aufweisen.

24. Lüftungsvorrichtung nach einem der Ansprüche 1 bis 23,
dadurch gekennzeichnet,
daß der die Einrichtung zur Wärmerückgewinnung (25) tragende Rahmen (38) aus Seitenwangen (90) besteht, die durch Profilstäbe (91, 92, 93) miteinander verbunden sind.

25. Lüftungsvorrichtung nach einem der Ansprüche 1 bis 24,
dadurch gekennzeichnet,
daß die Profilstäbe (91, 92, 93) die Eckbereiche der Profilabschnitte (95, 96) umgreifen.

26. Lüftungsvorrichtung nach einem der Ansprüche 1 bis 25,
dadurch gekennzeichnet,
daß die Profilstäbe (91, 92, 93) Dichtungen (91e, 92e, 93e) tragen, die im geschlossenen Zustand der Frontplatte (19) an entsprechende Dichtstellen (41) des Gehäuses (9) bzw. der Frontplatte (19) stoßen.

27. Lüftungsvorrichtung nach einem der Ansprüche 1 bis 26,
dadurch gekennzeichnet,
daß der Rahmen (38) über die gesamte Breite der Kammer (16) reicht.
